# EUROPEAN PATENT APPLICATION

(11) **EP 3 435 260 A1**
(43) Date of publication of application: **30.01.2019**
(21) Application number: 17769390.0
(22) Date of filing: 20.03.2017
(51) Int. Cl.: G06F 19/00

(54) **METHOD AND DEVICE FOR OUTPUTTING RISK INFORMATION AND CONSTRUCTING RISK INFORMATION**

(30) Priority: 25.03.2016 CN 201610176988
(71) Applicant: Alibaba Group Holding Limited, Grand Cayman (KY)
(72) Inventor: YANG, Luyi, Hangzhou Zhejiang 311121 (CN); LU, Qing, Hangzhou Zhejiang 311121 (CN); YUN, Lei, Hangzhou Zhejiang 311121 (CN); WANG, Wenwen, Hangzhou Zhejiang 311121 (CN); CUI, Yang, Hangzhou Zhejiang 311121 (CN)
(74) Representative: Conroy, John
(86) International application number: PCT/CN2017/077248
(87) International publication number: WO 2017/162113

(57) **Abstract**

The present application discloses a method and device for outputting risk information and constructing risk information, to resolve a problem that risk information output in the existing technology has poor applicability to different owners of a service. The method for outputting risk information includes the following: determining, based on a predetermined risk control rule and/or risk control model that include/includes one or more risk factors, a risk factor that corresponds to a risk control decision result of a service from the risk factors; determining a risk information set that corresponds to the corresponding risk factor, where the corresponding risk information set includes multiple levels of risk information with different refinement degrees, and the risk information is used to explain a cause of the risk control decision result; determining one or more levels of risk information with refinement degrees that match a risk information requirement level of a service owner from the multiple levels of risk information based on the risk information requirement level of the service owner; and outputting the determined risk information, so that the service owner obtains the determined risk information.

## Description

The present application claims priority to Chinese Patent Application No. 201610176988.6, filed on March 25, 2016 and entitled "METHOD AND DEVICE FOR OUTPUTTING RISK INFORMATION AND CONSTRUCTING RISK INFORMATION", which is incorporated here by reference in its entirety.

### TECHNICAL FIELD

The present application relates to the field of information technologies, and in particular, to a method and device for outputting risk information and constructing risk information.

### BACKGROUND

With the rapid development of information technologies, many services can be performed on the Internet, bringing convenience to people's lives but also causing risks to the services performed on the Internet. For example, some services may be illegal, some other services may be legal, but illegal users can impersonate as legal users to perform the services. In this case, a service platform on the Internet usually performs risk control on a service performed on the service platform, based on a predetermined risk control rule and/or risk control model, to obtain a risk control decision result, and output the risk control decision result to a service owner, so that the service owner subsequently processes the service based on the risk control decision result. The risk control decision result can be rejecting the service, accepting the service, etc.

In the existing technology, corresponding risk information can also be output to the service owner when the risk control decision result is output. The risk information is used to explain a cause of the risk control decision result. Currently, service platforms generally simply translate applied risk control rules in advance, and then output the translated risk control rules to owners of services as risk information.

However, in actual applications, different owners of a service have different industry experience and risk control capabilities. Correspondingly, risk information requirement degrees or depths of different owners of the service may be different. However, such difference is not considered when risk information is output in the existing technology. Therefore, the risk information output in the existing technology has poor applicability to different owners of a service.

### SUMMARY

Implementations of the present application provide a method and device for outputting risk information and constructing risk information, to resolve a problem that risk information output in the existing technology has poor applicability to different owners of a service.

An implementation of the present application provides a method for outputting risk information, including: determining, based on a predetermined risk control rule and/or risk control model that include/includes one or more risk factors, a risk factor that corresponds to a risk control decision result of a service from the risk factors, where the risk control decision result is determined based on the risk control rule and/or risk control model and service data that relates to the corresponding risk factor; determining a risk information set that corresponds to the corresponding risk factor, where the corresponding risk information set includes multiple levels of risk information with different refinement degrees, and the risk information is used to explain a cause of the risk control decision result; determining one or more levels of risk information with refinement degrees that match a risk information requirement level of a service owner from the multiple levels of risk information based on the risk information requirement level of the service owner; and outputting the determined risk information, so that the service owner obtains the determined risk information.

An implementation of the present application provides a device for outputting risk information, including: a risk factor determining module, configured to determine, based on a predetermined risk control rule and/or risk control model that include/includes one or more risk factors, a risk factor that corresponds to a risk control decision result of a service from the risk factors, where the risk control decision result is determined based on the risk control rule and/or risk control model and service data that relates to the corresponding risk factor; a first risk information determining module, configured to determine a risk information set that corresponds to the corresponding risk factor, where the corresponding risk information set includes multiple levels of risk information with different refinement degrees, and the risk information is used to explain a cause of the risk control decision result; a second risk information determining module, configured to determine one or more levels of risk information with refinement degrees that match a risk information requirement level of a service owner, based on the risk information requirement level of the service owner, from the multiple levels of risk information; and a risk information output module, configured to output the determined risk information, so that the service owner obtains the determined risk information.

An implementation of the present application provides a method for constructing risk information, including: splitting a predetermined risk control rule and/or risk control model, to obtain one or more risk factors included in the risk control rule and/or risk control model; and constructing a corresponding risk information set for each obtained risk factor, where the corresponding risk information set includes multiple levels of risk information with different refinement degrees. The risk information is used to explain a cause of a risk control decision result of a service, and the risk control decision result is determined based on the risk control rule and/or risk control model and service data that relates to the corresponding risk factor, so that one or more levels of risk information with refinement degrees that match a risk information requirement level of a service owner are determined from the multiple levels of risk information based on the risk information requirement level of the service owner, and are output to the service owner when the risk control decision result is output.

An implementation of the present application provides a device for constructing risk information, including: a risk factor acquisition module, configured to split a predetermined risk control rule and/or risk control model, to obtain one or more risk factors included in the risk control rule and/or risk control model; and a risk information construction module, configured to construct a corresponding risk information set for each obtained risk factor, where the corresponding risk information set includes multiple levels of risk information with different refinement degrees, the risk information is used to explain a cause of a risk control decision result of a service, and the risk control decision result is determined based on the risk control rule and/or risk control model and service data that relates to the corresponding risk factor, so that one or more levels of risk information with refinement degrees that match a risk information requirement level of a service owner are determined from the multiple levels of risk information based on the risk information requirement level of the service owner and are output to the service owner when the risk control decision result is output.

According to one or more of the previous technical solutions in the implementations of the present application, multiple levels of risk information with different refinement degrees corresponding to the risk factor can be constructed for each risk factor to satisfy different levels of risk information requirement degrees and/or depths of different owners of a service. In addition, different risk information requirement levels can be used to indicate different levels of risk information requirement degrees and/or depths. Further, one or more levels of risk information with refinement degrees that match a risk information requirement level of an owner of a service can be determined from the multiple levels of risk information based on the risk information requirement level of the service owner and be output when risk information is output, so that the service owner obtains the output risk information. Therefore, risk information output in the solutions of the present application has better applicability to different owners of a service, so that the problem in the existing technology can be partially or completely resolved.

### BRIEF DESCRIPTION OF DRAWINGS

The accompanying drawings described here are used to facilitate understanding of the present application, and constitute a part of the present application. Example implementations of the present application and descriptions of the implementations are used to explain the present application, and constitute no improper limitation to the present application. In the accompanying drawings:
FIG. 1 illustrates a process of a method for outputting risk information, according to an implementation of the present application;
FIG. 2 is a part of a schematic diagram illustrating risk information sets constructed for risk factors in a risk control scenario of a payment service, according to an implementation of the present application;
FIG. 3 is a part of a schematic diagram illustrating risk information sets constructed for risk factors in a risk control scenario of a payment service, according to an implementation of the present application;
FIG. 4 illustrates a process of a method for constructing risk information, according to an implementation of the present application;
FIG. 5 is a schematic structural diagram illustrating a hierarchical infocode output module configured to output risk information in a risk control scenario of a payment service, according to an implementation of the present application;
FIG. 6 is an example diagram illustrating a three-layer infocode framework in a risk control scenario of a payment service, according to an implementation of the present application;
FIG. 7 is a schematic structural diagram illustrating a device for outputting risk information corresponding to FIG. 1, according to an implementation of the present application; and
FIG. 8 is a schematic structural diagram illustrating a device for constructing risk information corresponding to FIG. 4, according to an implementation of the present application.

### DESCRIPTION OF IMPLEMENTATIONS

To make the objectives, technical solutions, and advantages of the present application clearer, the following clearly and completely describes the technical solutions of the present application with reference to the specific implementations and the corresponding accompanying drawings of the present application. Apparently, the described implementations are some rather than all of the implementations of the present application. All other implementations obtained by a person of ordinary skill in the art based on the implementations of the present application without creative efforts shall fall within the protection scope of the present application.

As mentioned in the background, risk information can be used to explain a cause of a corresponding risk control decision result, and risk information requirement degrees or depths of different owners of a service may be different.

For example, an owner of a service is a merchant that corresponds to a service. Experienced merchants prefer to see various risk signals of services behind risk control decision results, that is, prefer to see (more detailed, in-depth, etc.) risk information with a higher refinement degree, to improve their own risk control levels and understand current risk trends. New merchants in the industry are more engaged in market expansion, and have no professional team for receiving and processing professional risk information output. In this case, (more macro, simpler, etc.) risk information with a lower refinement degree is easy to understand and therefore is more suitable for such merchants.

However, such difference is not considered when risk information is output in the existing technology. Therefore, the output risk information may have poor applicability to different owners of a service.

To resolve the problem in the existing technology, a core idea of the solutions of the present application is as follows: Multiple levels of risk information with different refinement degrees are constructed to satisfy different levels of risk information requirement degrees and/or depths of different owners of a service, thereby improving applicability of output risk information to different owners of the service. Different levels of risk information requirement degrees and/or depths can be indicated by using different risk information requirement levels. The multiple levels of risk information can be constructed based on historical risk control experience. The solutions of the present application are described below in detail.

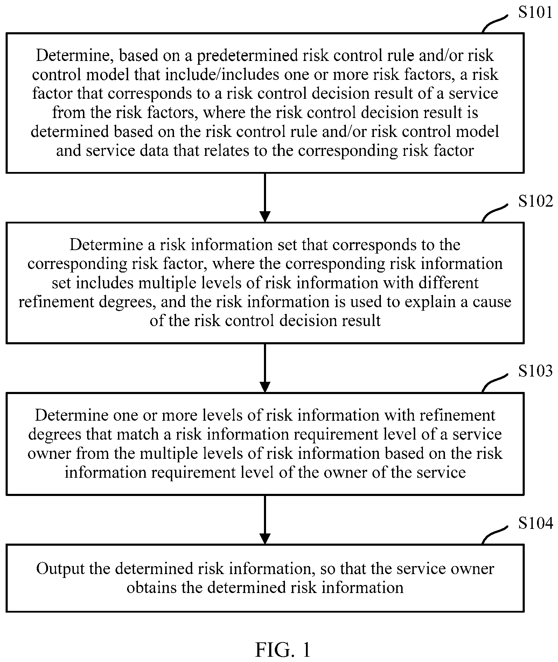

FIG. 1 illustrates a process of a method for outputting risk information, according to an implementation of the present application. The process can be performed by a server or a terminal device. To be more specific, the process can be performed by a function module configured to output risk information on the server or the terminal device. A device that can be used as the server includes, but is not limited to, a personal computer, a medium- or large-sized computer, a computer cluster, etc. A device that can be used as the terminal device includes, but is not limited to, a mobile phone, a tablet computer, a smartwatch, an in-vehicle mobile station, a personal computer, etc. The execution body constitutes no limitation to the present application. For ease of description, in this implementation of the present application, for example, the execution body is the server.

The process in FIG. 1 can include the following steps.

S101. Determine, based on a predetermined risk control rule and/or risk control model that include/includes one or more risk factors, a risk factor that corresponds to a risk control decision result of a service from the risk factors, where the risk control decision result is determined based on the risk control rule and/or risk control model and service data that relates to the corresponding risk factor.

In this implementation of the present application, the service can be "one service", and the process in FIG. 1 can be performed once for each service.

In this implementation of the present application, risk control can be performed on the service based on the risk control rule and/or risk control model, to obtain the risk control decision result. The risk control rule is usually executed by the risk control model, or the risk control model can include the risk control rule. In actual applications, the risk control rule and the risk control model can be considered as a risk policy system.

With the increasing complexity of network services, when risk control is performed on a service, it is difficult to accurately prevent and control risks based on simple risk behavior description. Therefore, the current risk control rule can be a single behavioral characteristic in some simple scenarios, but in most scenarios, it is a combination of multiple behavioral characteristics. A process of performing risk control on a service is a process of correspondingly matching behavioral characteristics (which can be extracted from data related to the service) of the service with behavioral characteristics of a risk control rule, so that a decision can be made based on a matching result, to determine a risk control decision result.

Further, each behavioral characteristic can be summarized by using one risk factor. In this case, the risk control rule can include one or more risk factors. Correspondingly, the risk control rule can be split into one or more risk factors. Similarly, the risk control model can also include one or more risk factors.

In this implementation of the present application, the service data that relates to the corresponding risk factor can be service data that reflects a behavioral characteristic that corresponds to the risk factor. The risk control decision result can correspond to one or more risk factors. If a risk control decision result of a service is caused by service data reflecting behavioral characteristics that correspond to one or several risk factors, it can be considered that the risk control decision result corresponds to the one or several risk factors.

The risk decision result of the service can include rejecting the service, accepting the service, needing to manually review the service, etc.

S102. Determine a risk information set that corresponds to the corresponding risk factor, where the corresponding risk information set includes multiple levels of risk information with different refinement degrees, and the risk information is used to explain a cause of the risk control decision result.

Because different risk factors correspond to different behavioral characteristics, different risk information can be used to explain causes of risk decision results that correspond to different risk factors.

As described above, a correspondence between a risk factor and risk information can be pre-established based on this. In this implementation of the present application, one corresponding risk information set can be pre-constructed for each risk factor. The risk information set can include multiple levels of risk information with different refinement degrees. The risk factor that corresponds to the risk information set is a risk factor that corresponds to the multiple levels of risk information included in the risk information set.

It is worthwhile to note that in the present application, that the risk information set includes the multiple levels of risk information can mean that the multiple levels of risk information have been constructed and stored in the risk information set, or the multiple levels of risk information have not yet been constructed but materials used to construct the multiple levels of risk information have been prepared in the risk information set. The multiple levels of risk information can be constructed in real time based on these materials before being output when the multiple levels of risk information need to be output.

In this implementation of the present application, multi-level risk information can be multiple levels of risk information, and the multiple levels of risk information can be refined layer by layer. For example, risk information at a top layer is macro and general, and risk information at a next layer is a further refinement (a detailed explanation, an expansion for some new content, etc.) of the risk information at the top layer. By analogy, except the risk information at the top layer, risk information at each layer can be a further refinement of risk information at a previous layer.

Certainly, there may be no "layer-by-layer refinement" association relationship between the multiple levels of risk information. For example, each level of risk information can be independently constructed. In this case, risk information at a current layer is not necessarily constructed based on risk information at a previous layer.

In this implementation of the present application, the multiple risk information levels can be obtained through division based on historical risk control experience, a requirement of a service owner, etc. There can be different division methods for different services. A specific division method of the multiple risk information levels is not limited in the present application.

S103. Determine one or more levels of risk information with refinement degrees that match a risk information requirement level of a service owner, from the multiple levels of risk information based on the risk information requirement level of the service owner.

In this implementation of the present application, the risk information requirement level of the service owner can be used to indicate a risk information requirement degree and/or depth of the service owner.

In actual applications, the risk information requirement level of the service owner can be inferred by the server from historical data, can be specified by the service owner, etc. In the former method, operations of the service owner can be reduced, so that convenience is higher. In the latter method, an opinion of the owner is directly adopted, so that accuracy is higher. A specific number and a specific division method of risk information requirement levels are not limited in the present application.

In this implementation of the present application, risk information requirement levels of different owners of the service may be different. Correspondingly, risk information at corresponding levels can be separately output to different owners, to separately satisfy requirements of different owners.

Further, for the multiple levels of risk information, each risk information requirement level can uniquely match one of the multiple levels of risk information, or can simultaneously match two, even more, of the multiple levels of risk information.

S104. Output the determined risk information, so that the service owner obtains the determined risk information.

In this implementation of the present application, the determined risk information can be directly output to the service owner. The risk information can be output to another device or function module, and then the risk information is sent by the another device or function module to the service owner. Alternatively, the risk information can be pre-stored, and then the risk information is output after a passive wait for the service owner to query the risk information, etc.

In this implementation of the present application, the risk control decision result and the risk information determined for the risk control decision result can be output by one device, or can be separately output by different devices. Implementations are not limited in the present application. Further, output moments and an output sequence of the risk control decision result and the risk information are not limited in the present application. The risk information can usually be output when the risk control decision result is output, so that the service owner can know the cause of the risk control decision result in a timely way.

According to the previous method, multiple levels of risk information with different refinement degrees corresponding to the risk factor can be constructed for each risk factor to satisfy different levels of risk information requirement degrees and/or depths of different owners of a service. In addition, different risk information requirement levels can be used to indicate different levels of risk information requirement degrees and/or depths. Further, one or more levels of risk information with refinement degrees that match a risk information requirement level of an owner of a service can be determined from the multiple levels of risk information based on the risk information requirement level of the service owner and be output when risk information is output, so that the service owner obtains the output risk information. Therefore, risk information output in the solutions of the present application has better applicability to different owners of a service, so that the problem in the existing technology can be partially or completely resolved.

Based on the previous method, this implementation of the present application further provides some specific implementation solutions and an extension solution of the previous method, which are described below.

In this implementation of the present application, as described above, a correspondence can be established between each risk factor included in the risk control rule and/or risk control model and one predetermined risk information set. In this case, for step S102, the determining a risk information set that corresponds to the corresponding risk factor can include the following: determining the risk information set that corresponds to the corresponding risk factor from predetermined risk information sets based on the correspondence.

Certainly, alternatively, instead of being pre-constructed, the risk information set can be constructed in real time when the risk information needs to be used. In this case, for step S102, the determining a risk information set that corresponds to the corresponding risk factor can include the following: constructing the risk information set that corresponds to the corresponding risk factor based on the corresponding risk factor.

In this implementation of the present application, information about the risk information requirement level of the service owner is used in a process of performing step S103. For ease of implementing the solutions of the present application, two methods for obtaining the information about the risk information requirement level are provided below as examples.
Method 1: The service owner or the server can pre-specify the risk information requirement level of the service owner, and then write the information about the specified risk information requirement level to a predetermined configuration file. In this case, before step S103, the risk information requirement level can be read from the predetermined configuration file. In Method 1, operations of the service owner can be reduced, so that convenience is higher.
Method 2: The server can infer the risk information requirement level of the service owner in real time when step S103 needs to be performed. The server can infer the risk information requirement level of the service owner from obtained risk control level information and/or risk control requirement information of the service owner. In Method 2, reference is made to the information related to the service owner, so that accuracy is higher.

It is worthwhile to note that a method for obtaining the risk control level information and/or risk control requirement information is not limited in the present application. The risk control level information and/or risk control requirement information can be collected by the server during historical interaction with the service owner, can be known by a service side manager through communication with the service owner, and then be output to the server, etc.

In this implementation of the present application, for step S104, several implementations have been provided above. In actual applications, one common implementation is as follows:

The outputting the determined risk information can include the following: outputting the determined risk information to the service owner when outputting the risk control decision result to the service owner. This implementation has the following advantage: The service owner can relatively synchronously see the corresponding risk information when seeing the risk control decision result, so that the service owner has better experience, and performs targeted subsequent processing on the service based on the transaction information, for example, re-submits the service after the risk is eliminated.

Both the "multiple levels of risk information" and the "risk information requirement level" are focuses of the solutions in the present application. For ease of understanding, the "multiple levels of risk information" and the "risk information requirement level" are separately further described here.

In this implementation of the present application, the risk information requirement level of the service owner is one of multiple predetermined risk information requirement levels, and it is used to indicate a risk information requirement degree and/or depth of the service owner. The multiple risk information requirement levels can be in a one-to-one correspondence with and match the multiple levels of risk information, and a risk information requirement level that indicates a higher risk information requirement degree and/or depth can match a level of risk information with a higher refinement degree in the multiple levels of risk information.

For example, the service is a payment service, and the service owner is a merchant that corresponds to the payment service. The payment service can be mainly performed based on a third-party payment platform, or can be mainly performed based on a payment platform provided by a bank.

All merchants in a payment service scenario can be classified into three types. A type of merchant with a relatively low risk information requirement degree and/or depth is referred to as "weak management and control merchant". A type of merchant with a relatively moderate risk information requirement degree and/or depth is referred to as "general management and control merchant". A type of merchant with a relatively high risk information requirement degree and/or depth is referred to as "strong management and control merchant".

Correspondingly, the multiple levels of risk information can be three levels of risk information. When the risk information is output, if the service owner is a weak management and control merchant, a level of risk information with the lowest refinement degree can be output. If the owner is a general management and control merchant, a level of risk information with a moderate refinement degree can be output. If the owner is a strong management and control merchant, a level of risk information with the highest refinement degree can be output.

In this implementation of the present application, the multiple levels of risk information can be constructed based on the risk control rule and/or risk control model and related historical risk control experience data, and are described by using a method that can be easily understood by the service owner.

Historical risk control experience can include experience summarized by the server in risk control processes for historical services, available experience provided by the service owner, etc. For example, the server can infer, from information provided by the service owner, risk information needed by the owner or similar owners, and risk information that can be easily understood by the owner or similar owners. Alternatively, the service owner can actively notify the server of risk information needed by the owner and a risk information description method that can be easily understood by the owner. All the data can be used as the historical risk control experience data.

The risk information can be information in a form of program code, or can be information in a form of a natural language. In the existing technology, the risk control rule is used as the risk information after being simply translated. However, in the solutions of the present application, the risk information can be described in an easy-to-understand language based on the historical risk control experience, and therefore can be easily understood by the service owner. Therefore, risk information output based on the solutions of the present application has better applicability.

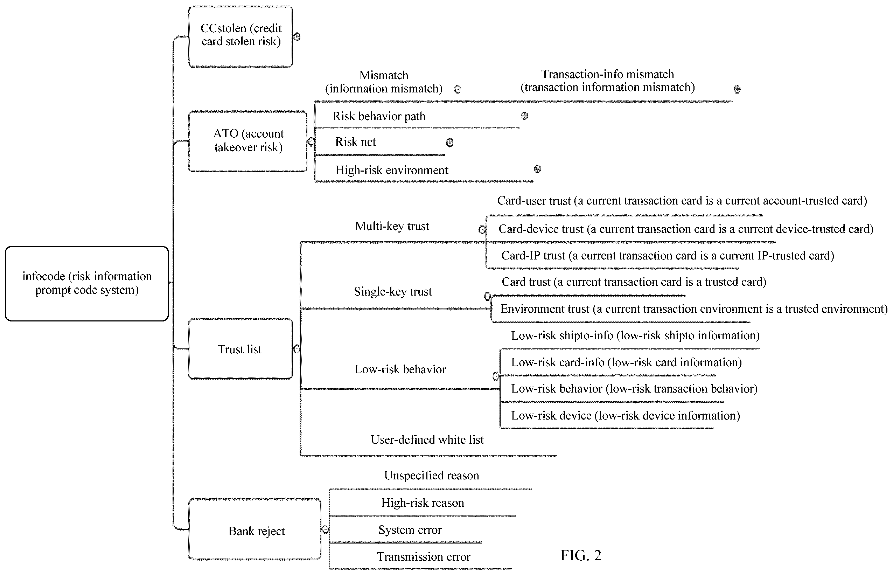

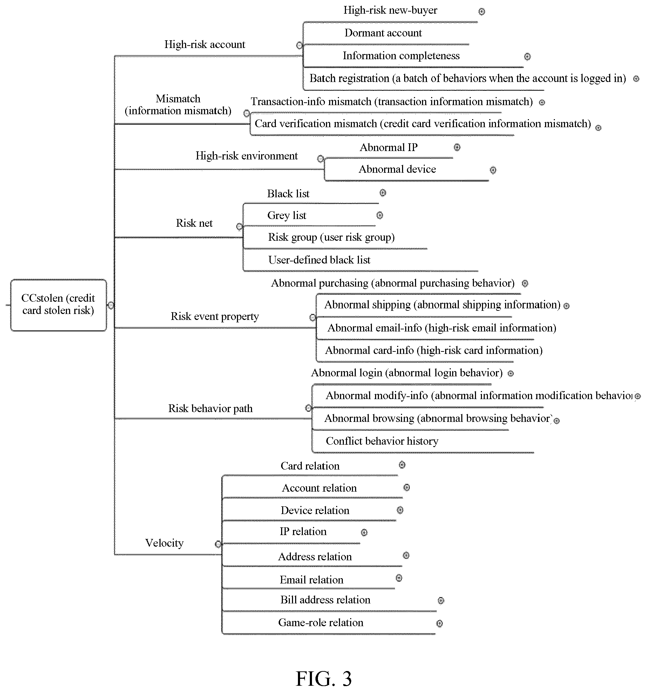

As shown in FIG. 2 and FIG. 3, an implementation of the present application provides a schematic diagram illustrating risk information sets constructed for risk factors in a risk control scenario of a payment service. FIG. 2 and FIG. 3 each are a part of the schematic diagram illustrating the risk information sets. Subnodes of "credit card stolen risk" in FIG. 2 are shown in FIG. 3.

In this scenario, risk information is referred to as "risk information prompt code (infocode)", and the risk information sets constructed for the risk factors are collectively referred to as "infocode system". It is worthwhile to note that the two names are merely examples and constitute no limitation to the present application. In another scenario, other names can be used.

In FIG. 2 and FIG. 3, a tree structure is used to indicate the infocode system. The "risk information prompt code system" node is a root node of the tree structure. There are four branches in total at a second layer of the tree structure. Each branch is an infocode set. These infocode sets are respectively a set including content of a "credit card stolen risk" node and content of all subnodes of the "credit card stolen risk" node, a set including content of an "account takeover risk" node and content of all subnodes of the "account takeover risk" node, a set including content of a "trust list" node and content of all subnodes of the "trust list" node, and a set including content of a "bank reject" node and content of all subnodes of the "bank reject" node.

Each infocode set corresponds to one risk factor (the risk factor is not shown). Each infocode set includes multiple levels of infocode. From the second layer of the tree structure, each layer is one of multiple levels of infocode, and a lower-level infocode has a higher refinement degree.

The infocode set that includes the "credit card stolen risk" node is used as an example. It can be seen in FIG. 3 that the infocode set includes three levels of infocode. First-level infocode includes the content of the "credit card stolen risk" node. Second-level infocode includes content of seven nodes: "high-risk account", "information mismatch", "high-risk environment", "risk net", "risk event property", "risk behavior path", and "velocity".

It can be seen that the second-level infocode is a further refinement of the first-level infocode. Similarly, the third-level infocode is a further refinement of the second-level infocode. For example, content of the "high-risk account" node in the second-level infocode is refined into content of four nodes: "high-risk new-buyer", "dormant account", "information completeness", and "a batch of behaviors when the account is logged in" in the third-level infocode. Content of the "information mismatch" node in the second-level infocode is refined into content of two nodes: "transaction information mismatch" and "credit card verification information mismatch" in the third-level infocode.

It can be seen from FIG. 2 and FIG. 3 that infocode with a higher refinement degree can give a more specific explanation of a cause of a risk control decision result.

It is worthwhile to note that content of the nodes in FIG. 2 and FIG. 3 may not be completely shown. FIG. 2 and FIG. 3 are merely examples of multiple levels of infocode, and constitute no limitation to the present application.

The method for outputting risk information provided in the implementations of the present application is described above in detail. Based on the same idea, an implementation of the present application further provides a method for constructing risk information.

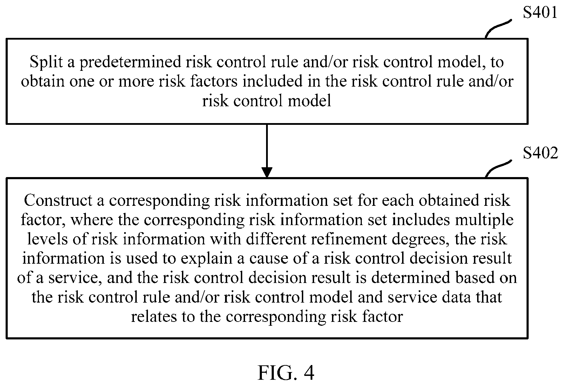

FIG. 4 shows a process of the method for constructing risk information. An execution body of the process can be the same as the execution body of the process in FIG. 1.

The process in FIG. 4 can include the following steps:
S401. Split a predetermined risk control rule and/or risk control model, to obtain one or more risk factors included in the risk control rule and/or risk control model.
S402. Construct a corresponding risk information set for each obtained risk factor, where the corresponding risk information set includes multiple levels of risk information with different refinement degrees. The risk information is used to explain a cause of a risk control decision result of a service, and the risk control decision result is determined based on the risk control rule and/or risk control model and service data that relates to the corresponding risk factor, so that one or more levels of risk information with refinement degrees that match a risk information requirement level of a service owner are determined from the multiple levels of risk information based on the risk information requirement level of the service owner, and are output to the service owner when the risk control decision result is output.

According to the method in FIG. 4, output risk information has better applicability to different owners of a service, so that the problem in the existing technology can be partially or completely resolved.

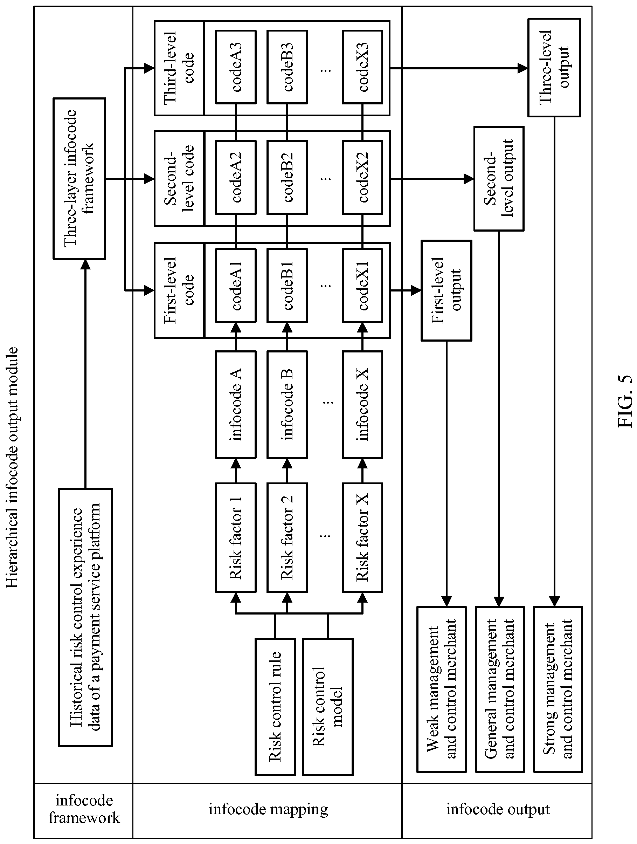

Based on the same idea, as shown in FIG. 5, an implementation of the present application further provides a schematic structural diagram illustrating a hierarchical infocode output module configured to output risk information in a risk control scenario of a payment service.

The module in FIG. 5 can be mainly divided into three parts.

A first part is an infocode framework used to construct a three-layer infocode framework based on historical risk control experience data of a payment service platform. Multiple levels of risk information are constructed based on the three-layer infocode framework.

A second part is an infocode mapping. Here, "mapping" is mainly a correspondence between risk factors (risk factor 1, risk factor 2, ..., and risk factor X) included in a risk control rule and/or risk control module and risk information sets (infocode A, infocode B, ..., and infocode X).

Each risk information set includes corresponding multiple levels of risk information. For example, infocode A includes three levels of risk information that are refined level by level: codeAl, codeA2, and codeA3.

A third part is infocode output used to hierarchically output multiple levels of risk information to service owners who match risk information requirement levels.

There are three risk information requirement levels: a weak management and control merchant, a general management and control merchant, and a strong management and control merchant. The weak management and control merchant can be a small-sized merchant or new merchant who has no risk control capability or does not focus on risk control. The general management and control merchant can be a small- or medium-sized merchant who has a certain risk control capability but has no professional risk control team, The strong management and control merchant can be a medium- or large-sized merchant who has a stronger risk control capability and has established a professional risk control team.

In actual applications, a server can analyze each payment service in real time, and can output infocode at a corresponding level to an owner of a service when outputting a risk control decision result such as "rejecting the service" or "accepting the service" with reference to a risk control rule and a risk control model.

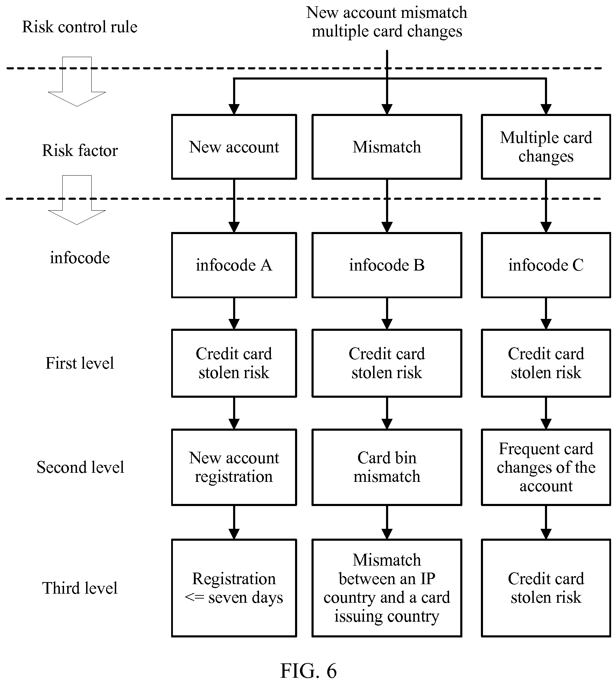

As shown in FIG. 6, an implementation of the present application further provides an example diagram illustrating a three-layer infocode framework in a risk control scenario of a payment service.

In FIG. 6, an applied risk control rule is referred to as "new account mismatch multiple card changes", and can be split into three risk factors: "new account", "mismatch", and "multiple card changes".

Each risk factor corresponds to one infocode set. The risk factor can be described in a more detailed dimension, and then three levels of infocode can be constructed. The three levels of infocode constitute one infocode set. For example, "mismatch" indicates a credit card stolen risk and an account takeover risk (which can be used as first-level infocode). Further, the credit card stolen risk can be classified into a card bin mismatch, a device mismatch, etc. (which can be used as second-level infocode). Further, the card bin mismatch can be classified into a mismatch between a card issuing country and an IP country, a mismatch between the card issuing country and a card shipping country and so on (which can be used as third-level infocode).

Based on the solutions in FIG. 5 and FIG. 6, a positive interaction between a payment service platform and a merchant can be effectively enhanced, and payment risk control experience can be enhanced.

It is worthwhile to note that in all of the previous examples, "three levels of risk information" is used as the "multiple levels of risk information". In actual applications, the multiple levels of risk information can be two levels of risk information, more than three levels of risk information, etc. In addition, the solutions of the present application can be implemented for all or some risk factors.

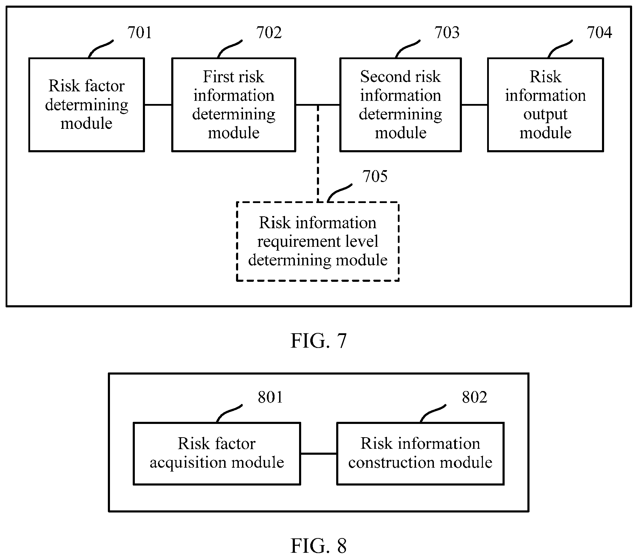

The method for outputting risk information and the method for constructing risk information provided in the implementations of the present application are described above. Based on the same idea, as shown in FIG. 7 and FIG. 8, the implementations of the present application further provide a corresponding device for outputting risk information and a corresponding device for constructing risk information.

FIG. 7 is a schematic structural diagram illustrating a device for outputting risk information corresponding to FIG. 1, according to an implementation of the present application. The device includes the following: a risk factor determining module 701, configured to determine, based on a predetermined risk control rule and/or risk control model that include/includes one or more risk factors, a risk factor that corresponds to a risk control decision result of a service from the risk factors, where the risk control decision result is determined based on the risk control rule and/or risk control model and service data that relates to the corresponding risk factor; a first risk information determining module 702, configured to determine a risk information set that corresponds to the corresponding risk factor, where the corresponding risk information set includes multiple levels of risk information with different refinement degrees, and the risk information is used to explain a cause of the risk control decision result; a second risk information determining module 703, configured to determine one or more levels of risk information with refinement degrees that match a risk information requirement level of a service owner from the multiple levels of risk information based on the risk information requirement level of the service owner; and a risk information output module 704, configured to output the determined risk information, so that the service owner obtains the determined risk information.

Optionally, a correspondence is established between each risk factor included in the risk control rule and/or risk control model and one predetermined risk information set.

The first risk information determining module 702 is configured to determine the risk information set that corresponds to the corresponding risk factor from predetermined risk information sets based on the correspondence.

Optionally, the device further includes the following: a risk information requirement level determining module 705, configured to determine the risk information requirement level that is of the service owner and that is specified in a predetermined configuration file, before the second risk information determining module 703 determines the one or more levels of risk information with the refinement degrees that match the risk information requirement level of the service owner; or infer the risk information requirement level of the service owner from obtained risk control level information and/or risk control requirement information of the service owner.

Optionally, the risk information output module 704 is configured to output the determined risk information to the service owner when outputting the risk control decision result to the service owner.

Optionally, the risk information requirement level of the service owner is one of multiple predetermined risk information requirement levels, and it is used to indicate a risk information requirement degree and/or depth of the service owner.

The multiple risk information requirement levels are in a one-to-one correspondence with and match the multiple levels of risk information, and a risk information requirement level that indicates a higher risk information requirement degree and/or depth matches a level of risk information with a higher refinement degree in the multiple levels of risk information.

Optionally, the multiple levels of risk information are constructed based on the risk control rule and/or risk control model and related historical risk control experience data, and are described by using a method that can be easily understood by the service owner.

Optionally, the risk control decision result of the service includes rejecting the service, accepting the service, or needing to manually review the service.

Optionally, the service includes a payment service, and the service owner includes a merchant that corresponds to the payment service.

The device in FIG. 7 can be located on a server or a terminal device.

FIG. 8 is a schematic structural diagram illustrating a device for constructing risk information corresponding to FIG. 4, according to an implementation of the present application. The device includes the following: a risk factor acquisition module 801, configured to split a predetermined risk control rule and/or risk control model, to obtain one or more risk factors included in the risk control rule and/or risk control model; and a risk information construction module 802, configured to construct a corresponding risk information set for each obtained risk factor, where the corresponding risk information set includes multiple levels of risk information with different refinement degrees, the risk information is used to explain a cause of a risk control decision result of a service, and the risk control decision result is determined based on the risk control rule and/or risk control model and service data that relates to the corresponding risk factor, so that one or more levels of risk information with refinement degrees that match a risk information requirement level of a service owner are determined from the multiple levels of risk information based on the risk information requirement level of the service owner, and are output to the service owner when the risk control decision result is output.

The device in FIG. 8 can be located on a server or a terminal device.

It is worthwhile to note that the devices provided in the present application are in a one-to-one correspondence with the methods provided in the present application. Therefore, the devices and the methods have similar beneficial technical effects. The beneficial technical effects of the methods have been described above in detail, and therefore the beneficial technical effects of the devices are omitted here for simplicity.

A person skilled in the art should understand that the implementations of the present disclosure can be provided as a method, a system, or a computer program product. Therefore, the present disclosure can use a form of hardware only implementations, software only implementations, or implementations with a combination of software and hardware. In addition, the present disclosure can use a form of a computer program product that is implemented on one or more computer-usable storage media (including, but not limited to, a magnetic disk storage, a CD-ROM, an optical memory, etc.) that include computer-usable program code.

The present disclosure is described with reference to the flowcharts and/or block diagrams of the method, the device (system), and the computer program product according to the implementations of the present disclosure. It should be understood that computer program instructions can be used to implement each process and/or each block in the flowcharts and/or the block diagrams and a combination of a process and/or a block in the flowcharts and/or the block diagrams. These computer program instructions can be provided for a general-purpose computer, a dedicated computer, an embedded processor, or a processor of another programmable data processing device to generate a machine, so that the instructions executed by the computer or the processor of the another programmable data processing device generate an apparatus for implementing a specific function in one or more processes in the flowcharts and/or in one or more blocks in the block diagrams.

These computer program instructions can be stored in a computer readable memory that can instruct the computer or the another programmable data processing device to work in a specific way, so that the instructions stored in the computer readable memory generate an artifact that includes an instruction apparatus. The instruction apparatus implements a specific function in one or more processes in the flowcharts and/or in one or more blocks in the block diagrams.

These computer program instructions can be loaded onto the computer or the another programmable data processing device, so that a series of operations and steps are performed on the computer or the another programmable device, thereby generating computer-implemented processing. Therefore, the instructions executed on the computer or the another programmable device provide steps for implementing a specific function in one or more processes in the flowcharts and/or in one or more blocks in the block diagrams.

In a typical configuration, a computing device includes one or more processors (CPU), an input/output interface, a network interface, and a memory.

The memory can include a non-persistent storage, a random access memory (RAM), a non-volatile memory, and/or another form that are in a computer readable medium, for example, a read-only memory (ROM) or a flash memory (flash RAM). The memory is an example of the computer readable medium.

The computer readable medium includes persistent, non-persistent, movable, and unmovable media that can store information by using any method or technology. The information can be a computer readable instruction, a data structure, a program module, or other data. A computer storage medium includes, but is not limited to, a phase-change random access memory (PRAM), a static random access memory (SRAM), a dynamic random access memory (DRAM), a random access memory (RAM) of another type, a read-only memory (ROM), an electrically erasable programmable read only memory (EEPROM), a flash memory or another memory technology, a compact disc read-only memory (CD-ROM), a digital versatile disc (DVD), or another optical storage, a cassette, a cassette magnetic disk storage, or another magnetic storage device or any other non-transmission medium. The computer storage medium can be configured to store information that can be accessed by the computing device. Based on the definition in the present specification, the computer readable medium does not include computer readable transitory media (transitory media), for example, a modulated data signal and carrier.

It is worthwhile to further note that the terms "include", "comprise", and any other variants of them are intended to cover a non-exclusive inclusion, so that a process, a method, an article, or a device that includes a list of elements not only includes those elements but also includes other elements that are not expressly listed, or further includes elements inherent to such process, method, article, or device. An element proceeded by "includes a ..." does not, without more constraints, preclude the existence of additional identical elements in the process, method, article, or device that includes the element.

The previous descriptions are merely implementations of the present application, and are not intended to limit the present application. For a person skilled in the art, the present application can have various modifications and changes. Any modification, equivalent substitution, improvement, etc. made based on the spirit and principle of the present application shall fall in the scope of the claims in the present application.

## Claims

1. A method for outputting risk information, comprising:
determining, based on a predetermined risk control rule and/or risk control model that comprise/comprises one or more risk factors, a risk factor that corresponds to a risk control decision result of a service from the risk factors, wherein the risk control decision result is determined based on the risk control rule and/or risk control model and service data that relates to the corresponding risk factor;
determining a risk information set that corresponds to the corresponding risk factor, wherein the corresponding risk information set comprises multiple levels of risk information with different refinement degrees, and the risk information is used to explain a cause of the risk control decision result;
determining one or more levels of risk information with refinement degrees that match a risk information requirement level of a service owner from the multiple levels of risk information based on the risk information requirement level of the service owner; and
outputting the determined risk information, so that the service owner obtains the determined risk information.

2. The method according to claim 1, wherein a correspondence is established between each risk factor comprised in the risk control rule and/or risk control model and one predetermined risk information set; and
the determining a risk information set that corresponds to the corresponding risk factor comprises:
determining the risk information set that corresponds to the corresponding risk factor from predetermined risk information sets based on the correspondence.

3. The method according to claim 1, wherein before the determining one or more levels of risk information with refinement degrees that match a risk information requirement level of a service owner, the method further comprises:
determining the risk information requirement level that is of the service owner and that is specified in a predetermined configuration file; or
inferring the risk information requirement level of the service owner from obtained risk control level information and/or risk control requirement information of the service owner.

4. The method according to claim 1, wherein the outputting the determined risk information comprises:
outputting the determined risk information to the service owner when outputting the risk control decision result to the service owner.

5. The method according to claim 1, wherein the risk information requirement level of the service owner is one of multiple predetermined risk information requirement levels and is used to indicate a risk information requirement degree and/or depth of the service owner; and
the multiple risk information requirement levels are in a one-to-one correspondence with and match the multiple levels of risk information, and a risk information requirement level that indicates a higher risk information requirement degree and/or depth matches a level of risk information with a higher refinement degree in the multiple levels of risk information.

6. The method according to any one of claims 1 to 5, wherein the multiple levels of risk information are constructed based on the risk control rule and/or risk control model and related historical risk control experience data, and are described by using a method that can be easily understood by the service owner.

7. The method according to any one of claims 1 to 5, wherein the risk control decision result of the service comprises rejecting the service, accepting the service, or needing to manually review the service.

8. The method according to any one of claims 1 to 5, wherein the service comprises a payment service, and the service owner comprises a merchant that corresponds to the payment service.

9. A method for constructing risk information, comprising:
splitting a predetermined risk control rule and/or risk control model, to obtain one or more risk factors comprised in the risk control rule and/or risk control model; and
constructing a corresponding risk information set for each obtained risk factor, wherein the corresponding risk information set comprises multiple levels of risk information with different refinement degrees, the risk information is used to explain a cause of a risk control decision result of a service, and the risk control decision result is determined based on the risk control rule and/or risk control model and service data that relates to the corresponding risk factor, so that one or more levels of risk information with refinement degrees that match a risk information requirement level of a service owner are determined from the multiple levels of risk information based on the risk information requirement level of the service owner and are output to the service owner when the risk control decision result is output.

10. A device for outputting risk information, comprising:
a risk factor determining module, configured to determine, based on a predetermined risk control rule and/or risk control model that comprise/comprises one or more risk factors, a risk factor that corresponds to a risk control decision result of a service from the risk factors, wherein the risk control decision result is determined based on the risk control rule and/or risk control model and service data that relates to the corresponding risk factor;
a first risk information determining module, configured to determine a risk information set that corresponds to the corresponding risk factor, wherein the corresponding risk information set comprises multiple levels of risk information with different refinement degrees, and the risk information is used to explain a cause of the risk control decision result;
a second risk information determining module, configured to determine one or more levels of risk information with refinement degrees that match a risk information requirement level of a service owner, based on the risk information requirement level of the service owner, from the multiple levels of risk information; and
a risk information output module, configured to output the determined risk information, so that the service owner obtains the determined risk information.

11. The device according to claim 10, wherein a correspondence is established between each risk factor comprised in the risk control rule and/or risk control model and one predetermined risk information set; and
the first risk information determining module is configured to determine the risk information set that corresponds to the corresponding risk factor from predetermined risk information sets based on the correspondence.

12. The device according to claim 10, wherein the device further comprises:
a risk information requirement level determining module, configured to: determine the risk information requirement level that is of the service owner and that is specified in a predetermined configuration file, before the second risk information determining module determines the one or more levels of risk information with the refinement degrees that match the risk information requirement level of the service owner; or infer the risk information requirement level of the service owner from obtained risk control level information and/or risk control requirement information of the service owner.

13. The device according to claim 10, wherein the risk information output module is configured to output the determined risk information to the service owner when outputting the risk control decision result to the service owner.

14. The device according to claim 10, wherein the risk information requirement level of the service owner is one of multiple predetermined risk information requirement levels and is used to indicate a risk information requirement degree and/or depth of the service owner; and
the multiple risk information requirement levels are in a one-to-one correspondence with and match the multiple levels of risk information, and a risk information requirement level that indicates a higher risk information requirement degree and/or depth matches a level of risk information with a higher refinement degree in the multiple levels of risk information.

15. The device according to any one of claims 10 to 14, wherein the multiple levels of risk information are constructed based on the risk control rule and/or risk control model and related historical risk control experience data, and are described by using a method that can be easily understood by the service owner.

16. The device according to any one of claims 10 to 14, wherein the risk control decision result of the service comprises rejecting the service, accepting the service, or needing to manually review the service.

17. The device according to any one of claims 10 to 14, wherein the service comprises a payment service, and the service owner comprises a merchant that corresponds to the payment service.

18. A device for constructing risk information, comprising:
a risk factor acquisition module, configured to split a predetermined risk control rule and/or risk control model, to obtain one or more risk factors comprised in the risk control rule and/or risk control model; and
a risk information construction module, configured to construct a corresponding risk information set for each obtained risk factor, wherein the corresponding risk information set comprises multiple levels of risk information with different refinement degrees, the risk information is used to explain a cause of a risk control decision result of a service, and the risk control decision result is determined based on the risk control rule and/or risk control model and service data that relates to the corresponding risk factor, so that one or more levels of risk information with refinement degrees that match a risk information requirement level of a service owner are determined from the multiple levels of risk information based on the risk information requirement level of the service owner and are output to the service owner when the risk control decision result is output.
